(19) **Europäisches Patentamt / European Patent Office / Office européen des brevets**

(11) **EP 3 543 654 B1**

(12) **FASCICULE DE BREVET EUROPEEN**

(45) Date de publication et mention de la délivrance du brevet:
**26.01.2022 Bulletin 2022/04**

(21) Numéro de dépôt: **19163747.9**

(22) Date de dépôt: **19.03.2019**

(51) Classification Internationale des Brevets (IPC):
**G01C 21/20** (2006.01)     **G06Q 10/04** (2012.01)
**G08G 5/00** (2006.01)

(52) Classification Coopérative des Brevets (CPC):
**G01C 21/20; G06Q 10/047; G06Q 10/063; G06Q 50/30; G08G 5/0034; G08G 5/006**

(54) **PROCÉDÉ ET SYSTÈME D'AIDE À UN OPÉRATEUR POUR ÉLABORER UN PLAN DE VOL D'UN AÉRONEF PASSANT PAR UN ENSEMBLE DE ZONES DE MISSION À COUVRIR**

HILFSVERFAHREN UND -SYSTEM FÜR EINEN BEDIENER ZUR AUSARBEITUNG EINES FLUGPLANS EINES LUFTFAHRZEUGS, DAS DURCH EINE GESAMTHEIT VON ABZUDECKENDEN EINSATZGEBIETEN FLIEGEN MUSS

METHOD AND SYSTEM FOR ASSISTING AN OPERATOR WITH CREATING A FLIGHT PLAN OF AN AIRCRAFT PASSING THROUGH A SET OF MISSION AREAS TO BE COVERED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2018 FR 1800241**

(43) Date de publication de la demande:
**25.09.2019 Bulletin 2019/39**

(73) Titulaire: **Thales**
**92400 Courbevoie (FR)**

(72) Inventeurs:
• **DUPONT, Guillaume**
  **33700 Merignac (FR)**
• **ARNEAU, David**
  **33700 Merignac (FR)**
• **BILLAULT, Ludovic**
  **33700 Merignac (FR)**

(74) Mandataire: **Marks & Clerk France**
**Immeuble "Visium"**
**22, avenue Aristide Briand**
**94117 Arcueil Cedex (FR)**

(56) Documents cités:
WO-A1-2009/093276     CN-A- 107 748 499
US-A1- 2015 066 248     US-A1- 2017 178 517
US-B1- 8 744 760

## Description

La présente invention concerne un procédé et un système d'aide d'un opérateur pour élaborer un plan de vol d'un aéronef passant par un ensemble de zones géographiques de mission à couvrir.

L'invention se situe dans le cadre d'une application de mission(s) aéronautique(s) pouvant être réalisée par un calculateur avionique embarqué à bord d'un aéronef avec ou sans pilote, par exemple un calculateur d'un système de gestion de vol FMS (en anglais Flight Management System), ou par une station de contrôle d'un aéronef sans pilote GCS (en anglais « Ground Control Station »), ou par une tablette tactile, par exemple de type EFB (en anglais « Electronic Flight Bag »), ou par un logiciel de préparation de mission aéronautique.

Les principales missions aéronautiques ciblées dans l'invention sont chacune exécutées dans une zone géographique précise et sont, par exemple, dans une zone géographique de mission donnée, des missions de Recherche et Secours (en anglais « Search And Rescue »), ou de surveillance terre ou mer, ou de relai de communications entre deux acteurs lorsque ces acteurs sont situés dans des zones géographiques de mission qui ne peuvent pas être reliés pour des raisons géographiques, par exemple montagnes ou étendues d'eau formant obstacles, mais peuvent être de manière plus générale tout type de mission devant s'effectuer dans une zone géographique déterminée.

A ce jour, le plan de vol d'un aéronef est construit manuellement par l'opérateur, i.e. le pilote ou le responsable de mission, au travers d'une interface homme machine dédiée, par exemple une unité d'affichage de commande multiple MCDU (en anglais Multipurpose Control Display Unit), ARINC 661, ou une console tactique, en positionnant un par un tous les points du plan de vol, i.e. des points de passage WPT (en anglais Way points) sur les zones géographiques de mission avec un ordre de parcours prédéterminé. Les positionnements des points et leur ordre de parcours résultent d'une estimation préalable d'un meilleur trajet de rejointe des différentes zones de mission, effectuée par le pilote sans assistance extérieure par un calculateur.

De tels positionnements sont décrits par exemple dans le brevet US 8275499 B2.

Les demandes de brevet WO 2009093276 A1 et CN 107748499 A divulguent des procédés d'élaboration d'un plan de vol pour une mission de surveillance d'une pluralité de zones d'intérêt par un avion ou un drone de reconnaissance; les points d'accès de chaque zone de mission sont définis sur les contours géographiques de la zone de mission.

Les demandes de brevet US2017/178517 A1, US 8744760 B1 et US 2015/066248 A1 divulguent différents type de trajectoires balayant une zone d'intérêt à surveiller et utilisées pour des missions de reconnaissance.

Toutefois, ce mode opératoire ne garantit pas que le trajet entre les zones de missions, estimé a priori par l'opérateur et affiné par le système de gestion de vol FMS, est toujours le plus court, et présente l'inconvénient que toute modification du plan de mission, consécutive à l'ajout d'une nouvelle zone de mission ou la modification d'une zone de mission existante ou la suppression d'une zone de mission nécessite la reprise manuelle du plan de vol par l'opérateur, ce qui a pour conséquence d'augmenter la charge de travail de l'opérateur.

Un premier problème technique est de fournir un procédé et un système d'aide à l'opérateur qui élabore de manière simple, rapide et précise un plan de vol d'un aéronef passant par un ensemble de zones géographiques de mission prédéterminées et dont le trajet spatial global interzones est rendu minimal.

Un deuxième problème technique est de fournir un procédé et un système d'aide à l'opérateur permettant de recalculer rapidement un plan de vol optimisé en distance de trajet interzones lorsque l'ensemble des zones est modifié par l'ajout d'une zone de mission, la suppression d'une zone de mission ou la modification d'une zone de mission existante.

Un troisième problème technique, connexe aux premier et deuxième problèmes technique est d'éviter l'utilisation des ressources d'un calculateur de vol de niveau de sécurité élevé, par exemple un calculateur de type FMS.

A cet effet, l'invention a pour objet un procédé d'aide d'un opérateur aéronautique à l'élaboration d'un plan de vol d'un aéronef passant par un ensemble de zones géographiques de mission prédéterminées, mis en œuvre par un système d'aide de l'opérateur comprenant un calculateur électronique d'aide, une interface homme système IHS associé et une base de données, le procédé d'aide à l'élaboration du plan de vol comprenant une première étape préalable dans laquelle est fourni un ensemble d'au moins deux zones géographiques de mission séparées, caractérisées géométriquement par leurs formes convexes et leur emplacement dans un repère géographique bidimensionnel, et sont fournies dans le même repère les coordonnées géométriques d'un point d'accès en entrée et d'un point d'accès en sortie de l'ensemble des zones de mission, les points d'accès en entrée et en sortie de l'ensemble étant séparées de chacune des zones de mission. Le procédé d'aide à l'élaboration du plan de vol est caractérisé en ce qu'il comporte un ensemble d'étapes consistant à :

   .- dans une deuxième étape, déterminer respectivement pour chaque zone de mission, un point d'accès d'entrée et un point d'accès en sortie de la zone de mission, les points d'accès d'entrée et sortie associées à une zone de mission pouvant être séparées ou confondus ; puis

   .- dans une troisième étape, déterminer un trajet interzones depuis le point d'accès en entrée jusqu'au point d'accès en sortie de l'ensemble des zones de mission qui connecte en série et sans boucle toutes les zones de mission par leurs points d'accès en entrée et en sortie, et dont la longueur est minimale.

Suivant des modes particuliers de réalisation, le procédé d'aide d'un opérateur aéronautique à l'élaboration d'un plan de vol d'un aéronef comporte l'une ou plusieurs des caractéristiques suivantes, prises isolément ou en combinaison :

.- le nombre total de zones de mission est un entier N supérieur ou égal à 2, et le trajet interzones dont la longueur est minimale est configuré pour relier suivant une chaine le point d'accès en entrée de l'ensemble des zones de missions au point d'accès en sortie de l'ensemble des zones de missions au travers d'une succession de N-1 segments intermédiaires reliant en série les N zones de mission sans reboucler sur une zone de mission depuis leur point d'accès en entrée respectif vers leur point d'accès en sortie respectif ; et la troisième étape utilise un algorithme de plus court chemin passant par tous les points d'entrée et de sortie des zones de mission, déterminés dans la deuxième étape depuis le point d'accès en entrée de l'ensemble des zones de mission jusqu'au point d'accès en sortie de l'ensemble des zones de mission ;

.- l'algorithme de plus court chemin est compris dans l'ensemble des algorithmes formés par l'algorithme « brute force », et les algorithmes génétiques, et l'algorithme des « colonies de fourmis, et l'algorithme du plus proche voisin.

.- le nombre total de zones de mission est un entier N supérieur ou égal à 2, et chaque zone de mission, identifiée par un indice d'identification i, i variant de 1 à N, a une forme polygonale ayant un nombre de coté $n_i$ et un nombre de sommets $n_i$ ;

.- l'ensemble des zones de mission comprend au moins une zone de mission de premier type ayant un point d'accès en entrée et un point d'accès en sortie différents qui sont situés tous deux sur le contour de ladite zone de missions de premier type, ou tous deux à l'intérieur de ladite zone de mission de premier type, ou pour l'un sur le contour de ladite zone de mission de premier type et pour l'autre à l'intérieur de ladite zone de mission de premier type ;

.- chaque zone de premier type comporte un motif interne ouvert de parcours de l'aéronef depuis le point d'accès en entrée vers le point d'accès en sortie de ladite zone de mission de premier type ;

.- le motif ouvert d'au moins une zone de mission de premier type est composé de segments successifs et/ou a une forme d'une courbe oscillante autour d'une direction principale ou une forme d'une courbe spirale ;

.- l'ensemble des zones de mission comprend au moins une zone de mission de deuxième type ayant un même point d'accès en entrée et en sortie, le point d'accès en entrée et en sortie étant situé à l'intérieur de ladite zone de mission de deuxième type ou sur le contour de ladite zone de mission de deuxième type ;

.- chaque zone de mission de deuxième type a une forme polygonale convexe, et le point d'accès en entrée et en sortie de ladite zone de deuxième type est situé à l'intérieur de ladite zone de mission et est l'isobarycentre des sommets de son polygone de contour ;

.- chaque zone de mission de deuxième type comporte un motif interne fermé de parcours de l'aéronef partant depuis le point d'accès unique servant d'entrée et retournant vers le point d'accès unique servant de sortie de ladite zone de mission de deuxième type ;

.- le motif interne fermé d'au moins une zone de mission de deuxième type est composé de segments successifs et/ou a une forme d'un ensemble d'un nombre entier, supérieur ou égal à 2, de lobes distribués angulairement sur un secteur d'ouverture angulaire limité ou omnidirectionnelle ;

.- le nombre total de zones de mission est un entier N supérieur ou égal à 2, et toutes les zones de mission sont des zones de mission de premier type ayant chacune un point d'accès en entrée et un point d'accès en sortie différents qui sont situés tous deux sur le contour de ladite zone de missions de premier type, ou tous deux à l'intérieur de ladite zone de mission de premier type, ou pour l'un sur le contour de ladite zone de mission de premier type et pour l'autre à l'intérieur de ladite zone de mission de premier type ;

.- le nombre total de zones de mission est un entier N supérieur ou égal à 2, et toutes les zones de mission sont des zones de mission de deuxième type ayant pour chacune un point d'accès en entrée et en sortie différent, le point d'accès en entrée et en sortie d'une zone de mission de deuxième type quelconque étant situé à l'intérieur de ladite zone de mission de deuxième type ou sur le contour de ladite zone de mission de deuxième type ;

.- le procédé ci-dessus comprend en outre une quatrième étape d'affichage, dans laquelle un afficheur affiche le plan de vol déterminé dans la troisième étape, et/ou une cinquième étape dans laquelle le plan de vol, déterminé dans la troisième étape, est transféré à un système de gestion de vol ayant un niveau de sécurité élevé.

L'invention a également pour objet un système d'aide d'un opérateur aéronautique à l'élaboration d'un plan de vol d'un aéronef passant par un ensemble de zones géographiques de mission prédéterminées, comprenant un calculateur électronique d'aide de l'opérateur aéronautique, une interface homme système IHS associé et une base de données; la base de donnée et/ou l'interface homme-système étant configuré pour dans une première étape préalable, fournir au calculateur électronique d'aide un ensemble au moins deux zones géographiques de mission séparées, caractérisées géométriquement par leurs formes convexes et leur emplacement dans un repère géographique bidimensionnel, et fournir dans le même repère les coordonnées géométriques d'un point d'accès en entrée et d'un point d'accès en sortie de l'ensemble des zones de mission, les points d'accès en entrée et en sortie de l'ensemble étant séparées de chacune des zones de mission. Le système d'aide de l'opérateur aéronautique à l'élaboration d'un plan de vol est caractérisé en ce que le calculateur électronique d'aide et/ou la base de données est ou sont configuré(s) pour, dans une deuxième étape, déterminer respectivement pour chaque zone de mission, un point d'accès d'entrée et un point d'accès en sortie de la zone de mission, les points d'accès d'entrée et sortie associées à une zone de mission pouvant être séparées ou confondus ; et le calculateur électronique d'aide est configuré pour, dans une troisième étape postérieure aux première et deuxième étape, déterminer un trajet interzones depuis le point d'accès en entrée jusqu'au point d'accès en sortie de l'ensemble des zones de mission qui connecte en série et sans boucle toutes les zones de mission par leurs points d'accès en entrée et en sortie, et dont la longueur est minimale.

Suivant un mode particulier de réalisation, le système d'aide d'un opérateur aéronautique à l'élaboration d'un plan de vol d'un aéronef comporte l'une ou plusieurs des caractéristiques suivantes :

.- l'interface homme-système est configuré pour, dans une quatrième étape, afficher au travers d'un afficheur le plan de vol déterminé dans la troisième étape, et/ou le calculateur d'aide est configuré pour dans une cinquième étape transférer le plan de vol, déterminé dans la troisième étape, à un système de gestion de vol ayant un niveau de sécurité élevé.

L'invention sera mieux comprise à la lecture de la description de plusieurs formes de réalisation qui va suivre, donnée uniquement à titre d'exemple et faite en se référant aux dessins sur lesquels :

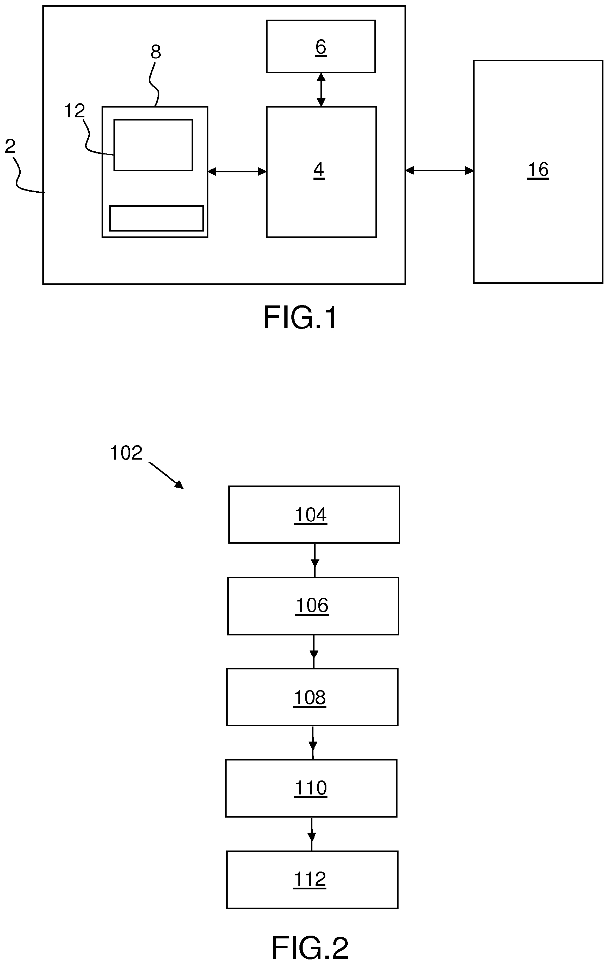

.- la Figure 1 est une vue d'un exemple de système d'aide à l'élaboration d'un plan de vol d'un aéronef selon l'invention, ledit système d'aide coopérant de manière particulière avec un système de gestion de vol de l'aéronef ;

.- la Figure 2 est un ordinogramme d'un procédé d'aide à l'élaboration d'un plan de vol selon l'invention, ledit procédé d'aide étant mis en œuvre par le système d'aide à l'élaboration d'un plan de vol de la Figure 1 ;

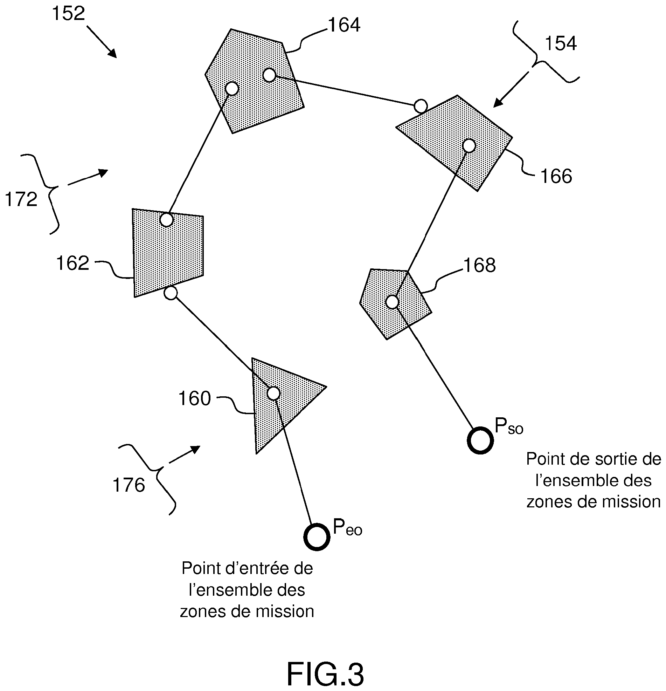

.- la Figure 3 est un premier exemple d'un plan de vol d'un aéronef correspondant à une première configuration d'un ensemble de zones de mission dont le trajet interzones est minimal, déterminé et fourni par le procédé d'aide selon l'invention de la Figure 2 ;

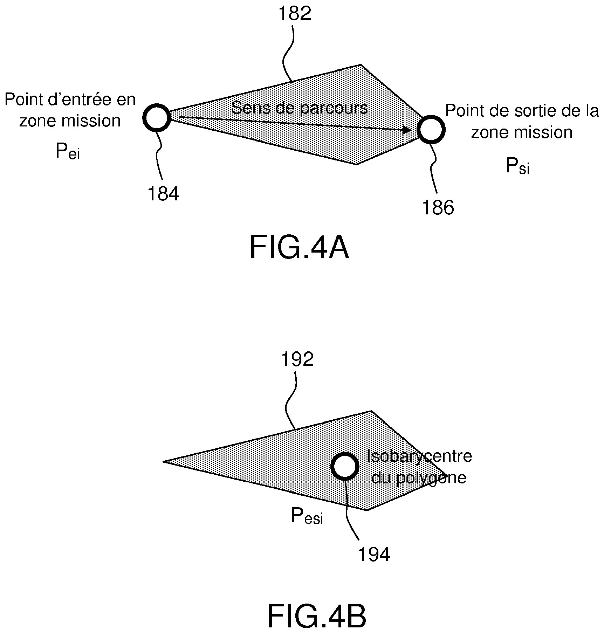

.- les Figures 4A et 4B sont des exemples de vue respectives d'une zone de mission d'un premier type et d'une zone de mission d'un deuxième type ;

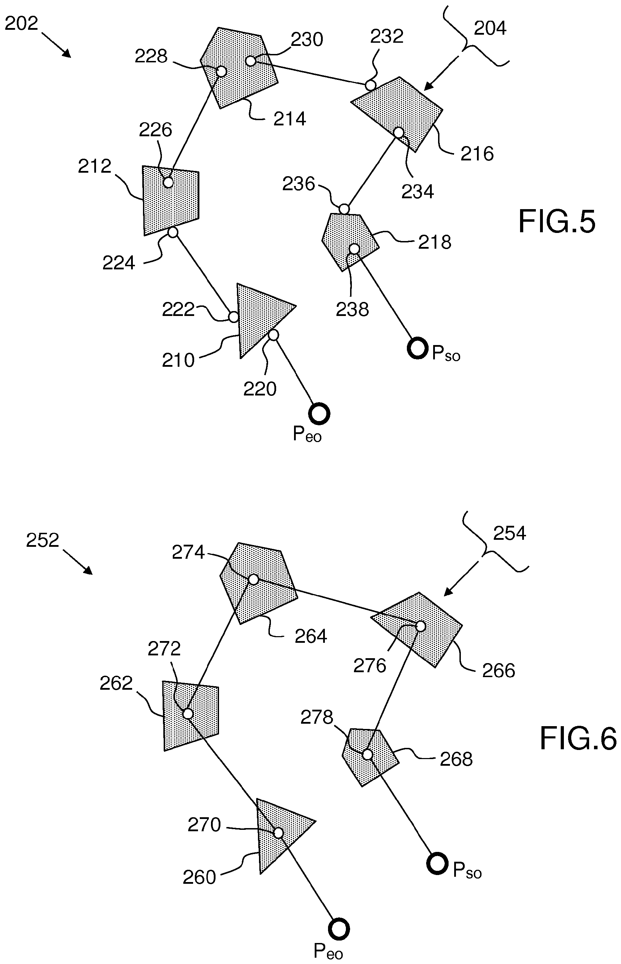

.- la Figure 5 est un deuxième exemple d'un plan de vol d'un aéronef correspondant à une deuxième configuration d'un ensemble de zones de mission dont le trajet interzones est minimal, déterminé et fourni par le procédé d'aide de la Figure 2 ;

.- la Figure 6 est un troisième exemple d'un plan de vol d'un aéronef correspondant à une troisième configuration d'un ensemble de zones de mission dont le trajet interzones est minimal, déterminé et fourni par le procédé d'aide de la Figure 2 ;

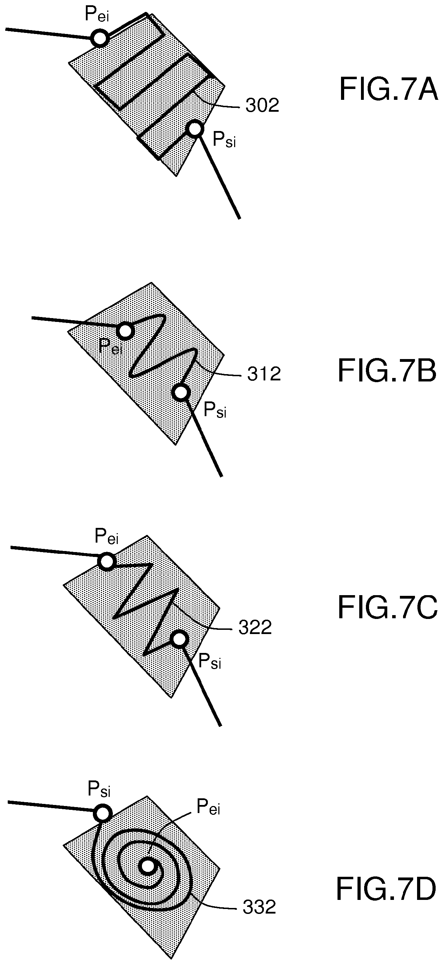

.- les Figures 7A, 7B, 7C, 7D sont respectivement des vues de premier, deuxième, troisième, quatrième modes de réalisation d'un motif interne d'une zone de mission de premier type ;

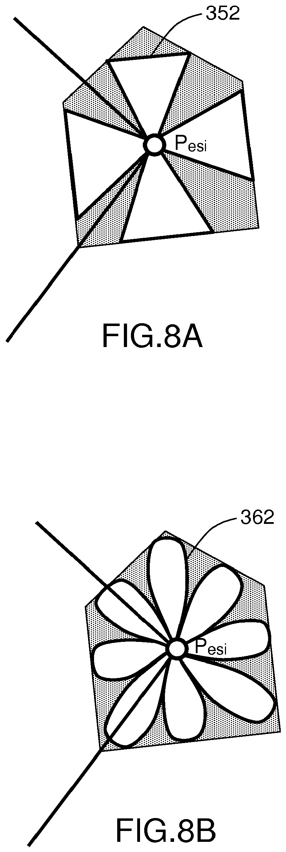

.- les Figures 8A, 8B sont respectivement des vues de premier, deuxième modes de réalisation d'un motif interne d'une zone de mission de deuxième type ;

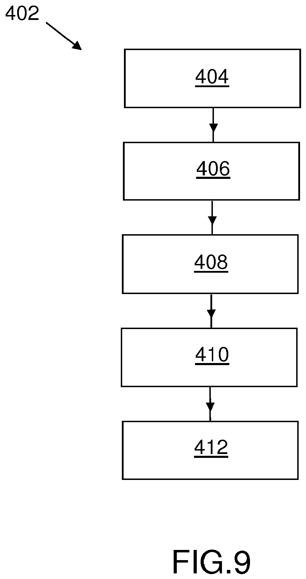

.- la Figure 9 est un ordinogramme d'un mode particulier de réalisation du procédé d'aide selon l'invention de la Figure 2, dans lequel l'étape de détermination d'un trajet interzones de longueur minimale utilise un algorithme de type « plus proche voisin » ;

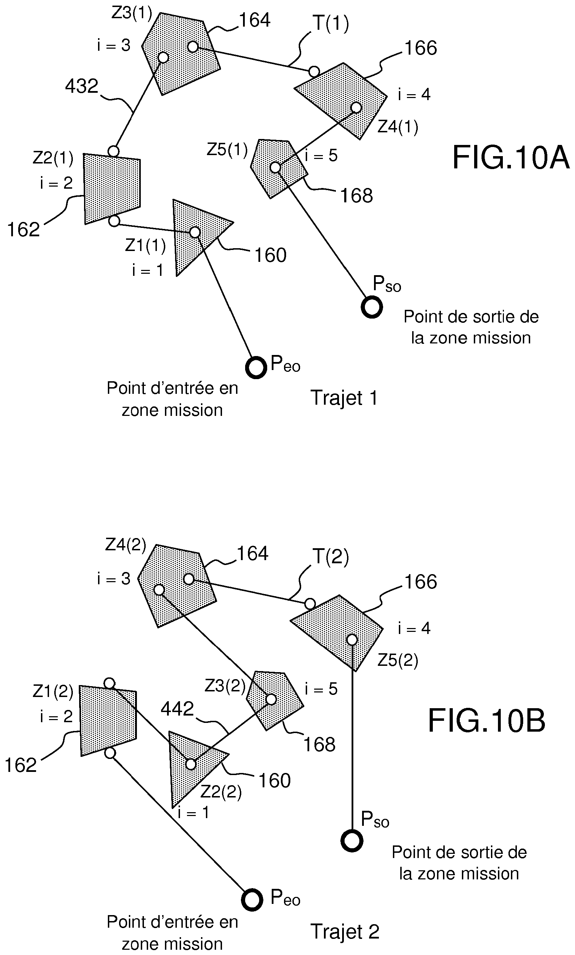

.- les Figures 10A et 10B sont des illustrations de deux trajets intermédiaires déterminés successivement par la troisième étape de détermination d'un trajet interzones de longueur minimale, partie du procédé d'aide de la Figure 9.

Le procédé d'aide à l'élaboration d'un plan de vol selon l'invention est basé sur l'utilisation d'un calculateur électronique qui permette à l'opérateur aéronautique de se concentrer uniquement sur les différentes missions qu'il doit réaliser et lui évite la phase d'une saisie manuelle d'un plan de vol, de mission dont la trajectoire interzones est estimé par l'opérateur lui-même comme réalisant le plus court chemin reliant les différentes zones de mission à parcourir.

Le procédé d'aide selon l'invention est fondé sur l'utilisation d'une base de données de type mission dans laquelle la géométrie de zones géographiques de mission est spécifiée.

Suivant la Figure 1, un système d'aide ou d'assistance 2 d'un opérateur aéronautique à l'élaboration d'un plan de vol d'un aéronef passant par un ensemble de zones géographiques de mission prédéterminées, comprend un calculateur électronique d'aide 4 de l'opérateur aéronautique à l'élaboration du plan de vol, une base de données 6, associée et connectée au calculateur électronique 4, et contenant des caractéristiques géométriques de zones géographiques de mission, et une interface homme système IHS 8.

La base de données 6 est configurée pour, dans une première étape préalable, fournir au calculateur électronique d'aide 4 un ensemble d'au moins deux zones géographiques de mission séparées, caractérisées géométriquement par leurs formes convexes et leur emplacement dans un repère géographique bidimensionnel, et pour fournir les coordonnées géométriques d'un point d'accès en entrée et d'un point d'accès en sortie de l'ensemble des zones de mission, les points d'accès en entrée Pe0 et en sortie Ps0 de l'ensemble des zones de mission étant séparées de chacune des zones de mission.

Les zones géographiques de mission sont définies chacune par un contour différent ayant une forme convexe et sont séparées, c'est-à-dire disjointes ou sans recouvrement entre elles, prises deux à deux.

Les points d'accès en entrée Pe0 et en sortie Ps0 de l'ensemble des zones de mission sont séparés de chacune des zones de mission, c'est à dire sont situés à l'extérieur de chacune des zones de mission.

L'interface homme-système IHS 8 et/ou le calculateur d'aide 4 est ou sont configurés pour, dans une deuxième étape, déterminer respectivement pour chaque zone de mission, un point d'accès d'entrée et un point d'accès en sortie de ladite zone de mission, les points d'accès d'entrée et sortie associées à une zone de mission pouvant être séparées ou confondus.

Le nombre total de zones de mission étant désigné par un entier N supérieur ou égal à 2, et pour chaque zone de mission supposée identifiée de manière unique par un indice d'identification i, i variant de 1 à N, le point d'accès en entrée de la zone de mission i et le point s'accès en sortie de la zone de mission « i » sont désignés respectivement par Pei et Psi.

Le calculateur électronique d'aide 4 est configuré pour, dans une troisième étape, postérieure aux première et deuxième étapes, déterminer un trajet interzones, partant depuis le point d'accès en entrée Pe0 et allant jusqu'au point d'accès en sortie Ps0 de l'ensemble des zones de mission, qui connecte en série et sans boucle toutes les zones de mission par leurs points d'accès en entrée et en sortie Pei, Psi, i variant de 1 à N, et dont la longueur est minimale.

L'interface homme système 8 est configuré pour, dans une quatrième étape, afficher au travers d'un afficheur 12 le plan de vol déterminé dans la troisième étape, et/ou le calculateur électronique d'aide 4 est configuré pour, dans une cinquième étape, transférer le plan de vol, déterminé et calculé dans la troisième étape par le calculateur électronique d'aide 4, à un système de gestion de vol 16 ayant un niveau de sécurité élevé, par exemple un système FMS (en anglais Flight Management System).

Suivant la Figure 2, un procédé d'aide ou d'assistance 102 d'un opérateur aéronautique à l'élaboration d'un plan de vol d'un aéronef, passant par un ensemble de zones géographiques de mission prédéterminées et dont la longueur du trajet interzones est la plus courte, est mis en œuvre par exemple par le système d'aide 2 de l'opérateur décrit à la Figure 1.

Le procédé d'aide à l'élaboration du plan de vol comprend de manière générale un ensemble d'au moins trois étapes 104, 106, 108.

Dans la première étape 104, des caractéristiques géométriques d'un ensemble d'au moins deux zones géographiques de mission séparées entre elles, prises deux à deux sont fournies au préalable au calculateur électronique d'aide 4 au travers de la base de données 6.

Les zones géographiques de mission de l'ensemble des zones de mission sont caractérisées géométriquement par leurs formes convexes et leur emplacement dans un repère géographique bidimensionnel.

Les principales missions aéronautiques, exécutées dans les zones géographiques de mission, sont par exemple des missions de Recherche et Secours, ou de surveillance terre ou mer, ou de relais de communications entre deux acteurs lorsque ces acteurs sont situés dans des zones géographiques qui ne peuvent pas être reliés pour des raisons géographiques, par exemple des montagnes ou des étendues d'eau formant obstacles, mais peuvent être de manière plus générale tout type de mission devant s'effectuer dans une zone géographique déterminée.

Au cours de la même première étape 104, l'opérateur fournit au calculateur électronique 4, au travers de l'interface homme-système IHS 8 et dans le même repère géométrique, les coordonnées géométriques d'un point d'accès en entrée Pe0 et d'un point d'accès en sortie Ps0 de l'ensemble des zones de mission i, i variant de 1 à N, les points d'accès en entrée et en sortie Pe0, Ps0, de l'ensemble étant séparées de chacune des zones de mission i, i variant de 1 à N.

Puis, dans la deuxième étape 106, la base de donnée 6 et/ou l'interface homme-système IHS 8 et/ou le calculateur détermine respectivement pour chaque zone de mission i, i variant de 1 à N, un point d'accès d'entrée Pei et un point d'accès en sortie Psi de la zone géographique de mission i, les points d'accès d'entrée et sortie Pei, Psi associés à une zone de mission pouvant être séparés ou confondus.

Ensuite, dans une troisième étape 108, le calculateur électronique d'aide 4 détermine un trajet interzones depuis le point d'accès en entrée Pe0 jusqu'au point d'accès en sortie Ps0 de l'ensemble des zones de mission qui connecte en série et sans boucle toutes les zones de mission par leurs points d'accès en entrée et en sortie, Pei, Psi, i variant de 1 à, N, et dont la longueur est minimale.

Le procédé d'aide 102 à l'élaboration d'un plan de vol comprend en outre, de manière optionnelle, une quatrième étape 110 et/ou une cinquième étape 112.

Dans la quatrième étape 110, l'interface homme-système 8 est configuré pour afficher au travers de l'afficheur 12 le plan de vol de mission déterminé dans la troisième étape 108.

Dans la cinquième étape 112, le calculateur électronique d'aide 4 transfère le plan de vol, déterminé dans la troisième étape 108 par le calculateur électronique d'aide 4, au système de gestion de vol 16 ayant un niveau de sécurité élevé, par exemple un système FMS (en anglais Flight Management System).

L'algorithme de plus court chemin passant par tous les points d'entrée et de sortie Pei, Psi, de toutes les zones de missions i, i variant de 1à N, utilisé dans la troisième étape 108, est compris dans l'ensemble des algorithmes formé par l'algorithme « brute force », les algorithmes génétiques, l'algorithme des « colonies de fourmis, et l'algorithme du « plus proche voisin ».

Ces algorithmes sont des algorithmes de résolution du problème connu sous la dénomination « problème du voyageur de commerce » et prennent en compte le sens de parcours des zones de missions pour chacune desquelles le point d'accès en entrée Pei doit toujours précéder le point d'accès en sortie Psi. Ces algorithmes répondent à « la problématique du voyageur du commerce », avec des résultats plus ou moins précis. Ainsi, l'algorithme dit de « brute force » qui calcule toutes les combinaisons de trajet possibles est très précis mais très couteux en temps de calcul, et de ce fait n'est utilisable que pour un nombre peu élevé de zones de mission.

Le nombre de zones de missions ainsi que le temps d'exécution et la précision de la réponse, pris seuls ou en combinaison, peuvent être des critères de choix de l'algorithme. Néanmoins, tous ces algorithmes sont utilisables pour l'implémentation de la troisième étape 108.

De manière particulière, chaque zone de mission i, i variant de 1 à N, peut avoir une forme polygonale complexe ayant un nombre de coté $n_i$ et un nombre de sommets $n_i$.

Suivant la Figure 3, un premier exemple d'un plan de vol 152 d'un aéronef dont le trajet interzones est minimal, déterminé et fourni par le procédé d'aide 102 de la Figure 2, comporte un ensemble 154 de zones de mission 160, 162, 164, 166, 168 dont la composition en termes de type de zones de mission est représentative d'une première configuration dans laquelle l'ensemble 154 des zones de mission peut être décomposé en un premier sous-ensemble 172 non vide de zones mission de premier type 162, 164, 166, et un deuxième sous-ensemble 176 non vide de zones de mission de deuxième type 160, 168.

Suivant un exemple de la Figure 4A, une zone de premier type 182 est une zone de mission qui possède un point d'accès en entrée 184 Pei par lequel l'aéronef entre et un point d'accès en sortie 186 Psi par lequel l'aéronef sort, distincts et repérés précisément, un sens de parcours global externe étant défini depuis le point d'accès en entrée 184 Pei vers le point d'accès en sortie 186 Psi. De tels points correspondent par exemple dans le cadre d'une mission de surveillance maritime au suivi d'un courant marin dont la trajectoire courbe n'a pas d'importance et où seuls les points d'entrée et de sortie importent.

Suivant un exemple de la Figure 4B, une zone de deuxième type 192 est une zone de mission qui possède un point d'accès unique 194 formant à la fois le point d'accès en entrée et le point d'accès en sortie de la zone de mission de deuxième type. Un tel point d'accès correspond par exemple à des missions de type Recherche et Secours en mode « sectoriel » dans lesquelles les points d'accès en entrée et en sortie de la zone de mission sont réduits à un point unique Pesi qui peut être égal par exemple à l'isobarycentre d'un polygone définissant et modélisant la zone de mission. Dans ce cas, le point unique d'accès en entrée et en sortie Pesi est déterminé par un calcul et mémorisé avant l'exécution de la troisième étape.

Suivant la Figure 5, un deuxième exemple d'un plan de vol 202 d'un aéronef dont le trajet interzones est minimal, déterminé et fourni par le procédé d'aide 102 de la Figure 2, comporte un ensemble 204 de première deuxième, troisième, quatrième, cinquième zones de mission 210, 212, 214, 216, 218, dont la composition en termes de type de zones de mission est représentative d'une deuxième configuration dans laquelle l'ensemble 204 est composé en totalité de zones de mission 210, 212, 214, 216, 218 de premier type.

Toutes les zones de mission 210, 212, 214, 216, 218 de premier type ont chacune un point d'accès en entrée 220, 224, 228, 232, 236 et un point d'accès en sortie 222, 226, 230, 234, 238 différents.

Le point d'accès en entrée 220 et le point d'accès en sortie 222 sont situés tous deux sur le contour de la première zone de mission 210 de premier type. De même, le point d'accès en entrée 232 et le point d'accès en sortie 234 sont situés tous deux sur le contour de la quatrième zone de mission 216 de premier type.

Le point d'accès en entrée 228 et le point d'accès en sortie 230 sont situés tous deux à l'intérieur de la troisième zone 214 de mission de premier type.

Le point d'accès en entrée 224 est situé sur le contour de la deuxième zone de mission 212 de premier type et le point d'accès en sortie 226 est situé à l'intérieur de la deuxième zone de mission 212 de premier type.

Suivant la Figure 6, un troisième exemple d'un plan de vol 252 d'un aéronef dont le trajet interzones est minimal, déterminé et fourni par le procédé d'aide 102 de la Figure 2, comporte un ensemble 254 de première deuxième, troisième, quatrième, cinquième zones de mission 260, 262, 264, 266, 268, dont la composition en termes de type de zones de mission est représentative d'une troisième configuration dans laquelle l'ensemble 204 est composé en totalité de zones de mission 260, 262, 264, 266, 268 de deuxième type.

Toutes les zones de mission 260, 262, 264, 266, 268 de deuxième type ont chacune un point d'accès en entrée et en sortie 270, 272, 274, 276, 278.

Ici, chaque point d'accès en entrée et en sortie 270, 272, 274, 276, 278 est situé à l'intérieur de leur zone de mission 260, 262, 264, 266, 268 de deuxième type respective.

En variante, tous les points d'accès en entrée et en sortie ou certain(s) d'entre eux peuvent être situés sur le contour de leur zone de mission de deuxième type respective.

Suivant la première configuration et la deuxième configuration, l'ensemble 154, 204 des zones de mission comprend au moins une zone de mission de premier type ayant un point d'accès en entrée et un point d'accès en sortie différents qui sont situés tous deux sur le contour de ladite zone de missions de premier type, ou tous deux à l'intérieur de ladite zone de mission de premier type, ou pour l'un sur le contour de ladite zone de mission de premier type et pour l'autre à l'intérieur de ladite zone de mission de premier type.

Suivant les Figures 7A, 7B, 7C, 7D, et de manière générale, chaque zone de premier type comporte un motif interne ouvert 302, 312, 322, 332 de trajet de parcours de l'aéronef depuis le point d'accès en entrée Pei vers le point d'accès en sortie Psi de ladite zone de mission de premier type.

Le motif interne ouvert d'une zone de mission de premier type peut être composé de segments successifs comme illustré par exemple sur les Figures 7A et 7D et/ou a une forme d'une courbe oscillante autour d'une direction principale comme illustré par exemple sur les Figures 7B et 7C ou une forme d'une courbe spirale comme illustré par exemple sur la Figure 7D.

Les motifs internes ouverts 302, 312, 322, 332 illustrés sur les Figures 7A, 7B, 7C, 7D sont respectivement un motif en forme d'échelle (en anglais « ladder »), un motif en forme d'une portion de sinusoïde, un motif en forme de dent de scie (en anglais « sawtooth ») et un motif en forme de spirale.

Suivant la Figure 7A, le motif interne ouvert 302 en forme d'échelle est connecté entre un point d'accès en entrée Pei et un point d'accès en sortie Psi, tous deux situés sur le contour de la zone de mission de forme trapézoïdale.

Suivant la Figure 7B, le motif interne ouvert 312 en forme de portion de sinusoïde est connecté entre un point d'accès en entrée Pei et un point d'accès en sortie Psi, tous deux situés à l'intérieur de la zone de mission de forme trapézoïdale.

Suivant la Figure 7C, le motif interne ouvert 322 en forme de dent de scie est connecté entre un point d'accès en entrée Pei, situé sur le contour de la zone de mission de forme trapézoïdale, et un point d'accès en sortie Psi situé à l'intérieur de la zone de mission.

Suivant la Figure 7D, le motif interne ouvert 332 en forme de spirale est connecté entre un point d'accès en entrée Pei, situé à l'intérieur de la zone de mission de forme trapézoïdale, et un point d'accès en sortie Psi, situé sur le contour de la zone de mission.

Suivant la première configuration et la troisième configuration, l'ensemble des zones de mission comprend au moins une zone de mission de deuxième type ayant un même point d'accès en entrée et en sortie, le point d'accès en entrée et en sortie étant situé à l'intérieur de ladite zone de mission de deuxième type ou sur le contour de ladite zone de mission de deuxième type.

De manière particulière, chaque zone de mission de deuxième type a une forme polygonale convexe, et le point d'accès en entrée et en sortie de ladite zone de deuxième type est situé à l'intérieur de ladite zone de mission et est l'isobarycentre des sommets de son polygone de contour.

Suivant les Figures 8A et 8B, et de manière générale, chaque zone de mission de deuxième type comporte un motif interne fermé 352, 362 de parcours de l'aéronef partant depuis le point d'accès unique Pesi servant d'entrée et retournant vers le point d'accès unique Pesi servant de sortie de ladite zone de mission de deuxième type.

Le motif interne fermé 352, 362 d'une zone de mission de deuxième type peut être composé de segments successifs comme illustré par exemple sur la Figure 8A et/ou a une forme d'un ensemble d'un nombre entier, supérieur ou égal à 2, de lobes distribués angulairement sur un secteur d'ouverture angulaire limité ou omnidirectionnelle comme illustré par exemple sur les Figures 8A et 8B.

Le procédé d'aide 102 de l'opérateur à l'élaboration d'un plan de vol permet ainsi de calculer automatiquement le meilleur plan de vol passant par toutes les zones de mission, sans intervention dudit opérateur.

Le plan de vol calculé peut être optimisé plus facilement en termes de trajet interzones de plus courte longueur :

.- en fournissant des caractéristiques géométriques précises et simples de toutes les zones de mission dans lesquelles l'aéronef doit circuler, les zones géographiques de missions étant séparées, prises deux à deux, et

.- en utilisant un algorithme de résolution du problème du « voyageur de commerce ».

Le procédé d'aide 102 selon l'invention permet à l'opérateur de s'affranchir de la saisie manuelle, point par point, d'un plan de vol optimisé en terme de trajet interzones et de bénéficier de la fiabilité offerte par un calcul automatique.

Le procédé d'aide 102 à l'élaboration d'un plan de vol selon l'invention de par sa simplicité et sa rapidité de mise en œuvre permet de modifier automatiquement et de manière versatile le plan de vol optimisé pendant la progression de l'aéronef en cas d'évolution du plan de mission par ajout ou modification ou suppression d'une zone de mission. En cas de modification du plan de mission, un meilleur trajet interzone en terme de longueur minimale peut être calculé avec précision et rapidité pour prendre en compte la création d'une nouvelle zone de mission ou la modification ou la suppression d'une zone de mission existante.

Ainsi le procédé d'aide de l'opérateur selon l'invention réduit la charge de travail dudit opérateur qui ne doit plus élaborer son plan de vol manuellement en optimisant lui-même de manière heuristique et peu fiable le chemin parcouru.

Le procédé d'aide selon l'invention, exécuté pendant le déroulement des missions ou lors d'une phase préparatoire des missions permet de mener à bien une ou plusieurs missions opérationnelles.

Le procédé d'aide selon l'invention permet de prendre en compte l'évolutivité du plan de mission en temps réel et en fonction du contexte opérationnel au moment où une mission se déroule. En fonction de ces missions, le plan de vol de l'aéronef doit être calculé, puis modifié pour suivre les évolutions.

Le calculateur du système d'aide propose le meilleur plan de vol passant par toutes les zones de mission à l'opérateur ou au pilote, tout en choisissant le plus court chemin afin de réduire le temps de parcours.

Suivant la figure 9 et un mode de réalisation particulier du procédé d'aide à l'élaboration d'un plan de vol 102 selon l'invention décrit à la Figure 2, un procédé d'aide 402 d'un opérateur aéronautique à l'élaboration d'un plan de vol optimisé en termes de longueur de son trajet interzones la plus courte est configuré pour déterminer un trajet interzones, optimisé par un algorithme de « plus proche voisin », passant par toutes les zones de mission 160, 162, 164, 166, 168, décrites dans la Figure 3, de l'ensemble 154 des zones de mission correspondant à une première configuration.

Le procédé d'aide 402 à l'élaboration d'un plan de vol comprend des première, deuxième, troisième, quatrième et cinquième étapes 404, 406, 408, 410, 412.

La première étape 404, identique à la première étape 104 du procédé d'aide 102, consiste à entrer dans la base de données les caractéristiques géométriques des zones de missions. Ici, les zones de missions sont modélisées par des polygones et les zones de mission 210, 212, 214, 216, 218 ont respectivement une forme triangulaire, une forme trapézoïdale, une forme pentagonale, une forme quadrilatère, une forme pentagonale.

Puis dans la deuxième étape 406, les points d'accès en entrée et les points d'accès en sortie des zones de mission sont déterminés par le calculateur électronique de mission.

Pour les zones de mission de premier type, les points d'accès en entrée et les points d'accès en sortie sont connus et prédéterminés dans la base de données et sont fournis au calculateur électronique.

Pour les zones de mission de deuxième type, les points d'accès en entrée et en sortie sont calculées par le calculateur électronique d'aide à partir des caractéristiques géométriques des polygones des zones de mission de deuxième type comme étant les isobarycentres Pesi, i étant ici égal à 1 et 5, des polygones correspondants des zones de mission de deuxième type, ici la première zone de mission 160 (i=1) et la cinquième zone de mission (i=5).

Etant supposé que la géométrie des polygones est définie dans un repère cartésien, les coordonnées Xesi, Yesi des points d'accès en entrée et sortie Pesi, i égal à 1 ou 5, sont calculées en moyennant les coordonnées des ni points sommets du polygone de la zone de mission de deuxième type de rang i, suivant les équations :

$$X_{esi} = \frac{1}{ni} \sum_{k=1}^{ni} X_i(k)$$

$$Y_{esi} = \frac{1}{ni} \sum_{k=1}^{ni} Y_i(k)$$

Ensuite, dans la troisième étape 408, un trajet interzones de plus courte longueur est calculé par un algorithme de plus proche voisin.

Les quatrième et cinquième étapes 410, 412 sont identiques aux quatrième et cinquième étapes 110, 112 du procédé 102 de la Figure 2.

Suivant la Figure 10A, partant d'un point géographique Pe0, précisément identifié comme point de départ et le point d'accès en entrée de l'ensemble des cinq zones de mission du plan de vol mission, i variant de 1 à 5, on choisit une zone de mission parcourue en premier Z1(1), ici par exemple la première zone de mission 160 (i=1).

On calcule ensuite la distance interzone entre le point Pe0 d'accès en entrée à l'ensemble des zones de mission et la zone de mission parcouru en premier. On obtient alors une première distance d(Pe0,PeZ1(1)).

Puis dans la liste des zones de mission i restantes, on recherche la zone de mission Z2(1), la plus proche de Z1(1) en calculant les distances d(PsZ1(1), Pei), ici i variant dans l'ensemble {1, 2, 3, 4, 5}\{1}. On conserve uniquement la plus courte distance d(PsZ1(1), PeZ2(1)) et on mémorise la zone de mission parcourue en deuxième Z2(1), ici la deuxième zone de mission 162 (i=2).

On recommence avec les zones de mission restantes suivantes, en recherchant la zone de mission la plus proche de Z2(1) par le calcul de toutes les distances d(PsZ2(1), Pei), ici i variant dans l'ensemble {1, 2, 3, 4, 5}\{1,2}. On conserve uniquement la plus courte distance d(PsZ2(1), PeZ3(1)) et on mémorise la zone de mission parcourue en troisième. Et on recommence ainsi de suite de proche en proche avec les zones de mission restantes suivantes.

Toutes les « plus courtes distances » d(Pe0,PeZ1(1)), d(PsZ1(1), PeZ2(1)), d(PsZ2(1), PeZ3(1)), ..., d(PsZ5(1), Ps0) entre les différents polygones des zones de mission Z1(1), Z2(1), Z3(1), Z4(1), Z5(1) et les points d'accès Pe0, Ps0 en entrée et en sortie de l'ensemble des zones de mission ainsi déterminées sont mémorisées, et une distance totale $d_{tot}(1)$ est calculée comme la somme desdites plus courtes distances.

Ainsi, une fois toutes les zones de mission traitées, on a calculé un premier trajet inter-zones T(1) 432, illustré la Figure 10A par l'algorithme des plus proches voisins. Ce trajet T(1) démarre par une zone choisie en premier comme la zone de mission parcouru en premier notée Z1(1).

Suivant la Figure 10B on réitère l'algorithme décrit pour l'obtention du du premier trajet interzones T(1) de la Figure 10A en choisissant une autre zone de mission parcourue en premier, notée Z1(2), différente de la ou des zones parcourues en premier dans le ou les trajets déjà calculés, c'est-à-dire ici le trajet interzones T1(1), la zone de mission choisie en premier étant ici égale à la deuxième zone de mission 162 (i=2), et en déterminant de proche en proche à partir de la zone de mission Z1(2) la chaine des zones de mission Z2(2), Z3(2), Z4(2) et Z5(2), ici les première, cinquième, troisième et quatrième zones de mission 160, 168, 164, 166. On détermine ainsi un deuxième trajet T(2) 442 qui sera comparé au trajet le plus court conservé, c'est-à-dire ici, le premier trajet T(1). Et ainsi de suite, on calcule les autres trajets T(3), T(4) et T(5), jusqu'à ce qu'on ait utilisé la totalité des N zones de mission choisies comme zones de mission, parcourues en premier et connectées au point d'accès en entrée de l'ensemble des zones de mission, et on garde au fur et à mesure le trajet interzones.

On conserve au fur et à mesure uniquement le trajet interzones parmi l'ensemble des trajets T(1), T(2), T(3), T(4), et T(5) qui correspond à la plus courte distance parcourue. Le résultat obtenu est donc ici une succession de points ordonnés, le point d'accès en entrée de l'ensemble des zones de mission, les points d'accès en entrée et en sortie de chaque zone de mission, et le point d'accès en sortie de l'ensemble des zones de mission.

Ici, le trajet interzone qui est déterminé le plus court est le premier trajet T(1).

On dispose ainsi d'un chemin ou trajet optimisé, capable de guider l'aéronef d'une zone de mission vers une autre zone de mission sur la totalité des N zones de mission à parcourir.

Pour obtenir un plan de vol complet, il ne reste plus qu'à introduire les chemins internes spécifiques à chaque zone de mission, caractérisés par des motifs internes ouverts et/ou fermés. Ces chemins et motifs internes dépendent des missions à effectuer dans les différentes zones de mission.

Plusieurs algorithmes différents peuvent être utilisés pour calculer le trajet interzone ayant la longueur la plus courte. Un algorithme préféré est celui des « plus proches voisins » car il est simple à mettre en œuvre, peu coûteux en temps de calcul et d'une complexité en $N^2$. Cet algorithme présente de bonnes performances quand le nombre des points d'accès en entrée et en sortie à parcourir n'est pas très grand, ce qui est le cas dans le contexte opérationnel envisagé.

Le procédé d'aide de l'opérateur à l'élaboration d'un plan de vol selon l'invention peut être mis en œuvre au sein d'un logiciel applicatif de type « mission », embarqué sur un calculateur avionique, dont l'objectif est d'aider l'opérateur à définir le plan de vol d'un aéronef à partir d'un ensemble de zones de mission à parcourir.

Les missions ciblées sont notamment de types Recherche et Secours (en anglais « Search and Rescue »), relais de communication, navigation tactique et/ou Surveillance.

En variante, le logiciel applicatif de type « mission » permettant la mise en œuvre du procédé d'aide selon l'invention peut également être déployé sur une tablette tactile de type EFB (en anglais « Electronic Flight Bag ») pour ajouter des fonctionnalités de missions opérationnelles à l'avionique du cockpit et de l'aéronef.

Les aéronefs porteurs concernés par l'invention sont compris dans l'ensemble formé par les hélicoptères, les avions et les ballons dirigeables.

En variante, le logiciel applicatif de type « mission », permettant la mise en œuvre du procédé d'aide selon l'invention, peut également être utilisé pour la gestion des missions d'aéronefs sans pilotes ou drones. Dans ce cas la gestion de la mission est effectuée au sol, à partir d'une station de contrôle GCS (en anglais « Ground Control Station »). Le procédé et le système d'aide selon l'invention permet d'aider l'opérateur de pilotage du drone, à l'élaboration de la trajectoire de l'aéronef piloté en fonction des missions que doit accomplir ledit aéronef, en construisant de manière simplifiée, fiable et versatile, un plan de vol du drone qui minimise la longueur du trajet interzones parcouru. Sur la console de l'opérateur, une interface Homme-Machine est configurée pour fournir un plan de vol optimisé du drone en fonction des données missions transmises par un centre de commandement.

Il est à remarquer que le plan de vol optimisé en distance se ramène à un plan de vol optimisé en temps lorsque le vent est nul.

De manière générale, l'invention décrite ci-dessus peut s'appliquer à tout système concerné par des zones à rallier et à couvrir, et peut donc s'appliquer également à un bateau ou un véhicule terrestre.

## Revendications

1. Procédé d'aide d'un opérateur aéronautique à l'élaboration d'un plan de vol d'un aéronef passant par un ensemble de zones géographiques de mission prédéterminées, mis en œuvre par un système d'aide (2) de l'opérateur comprenant un calculateur électronique d'aide (4), une interface homme système IHS (8) associé et une base de données (6) ;

le procédé d'aide à l'élaboration du plan de vol comprenant un ensemble d'étapes consistant à :

.- dans une première étape (104 ; 404) préalable, fournir un ensemble (154) au moins deux zones géographiques de mission séparées, caractérisées géométriquement par leurs formes convexes et leur emplacement dans un repère géographique bidimensionnel, et fournir dans le même repère les coordonnées géométriques d'un point d'accès en entrée et d'un point d'accès en sortie de l'ensemble des zones de mission, les points d'accès en entrée et en sortie de l'ensemble étant séparés de chacune des zones de mission ; puis

- dans une deuxième étape (106 ; 406) , déterminer respectivement pour chaque zone de mission, un point d'accès d'entrée et un point d'accès en sortie de la zone de mission, les points d'accès d'entrée et sortie associés à une zone de mission pouvant être séparés ou confondus ; puis

- dans une troisième étape (108 ; 408), déterminer à l'aide d'un algorithme de plus court chemin un trajet interzones depuis le point d'accès en entrée jusqu'au point d'accès en sortie de l'ensemble des zones de mission qui connecte en série et sans boucle toutes les zones de mission par leurs points d'accès en entrée et en sortie, et dont la longueur est minimale,

le procédé d'aide à l'élaboration du plan de vol étant **caractérisé en ce que** :

l'ensemble (154; 204) des zones de mission comprend au moins une zone de mission de premier type (162, 164, 166 ; 212, 214, 216, 218) ayant un point d'accès en entrée et un point d'accès en sortie différents qui sont tous deux à l'intérieur de ladite zone de mission de premier type, ou pour l'un sur le contour de ladite zone de mission de premier type et pour l'autre à l'intérieur de ladite zone de mission de premier type ; et/ou l'ensemble (154 ;254) des zones de mission comprend au moins une zone de mission de deuxième type (160, 168 ; 260, 192 ; 262, 264, 266, 268) ayant un même point d'accès en entrée et en sortie, le point d'accès en entrée et en sortie étant situé à l'intérieur de ladite zone de mission de deuxième type ou sur le contour de ladite zone de mission de deuxième type.

2. Procédé d'aide à l'élaboration d'un plan de vol selon la revendication 1, dans lequel

Le nombre total de zones de mission est un entier N supérieur ou égal à 2, et le trajet interzones dont la longueur est minimale est configuré pour relier suivant une chaine le point d'accès en entrée de l'ensemble des zones de missions au point d'accès en sortie de l'ensemble des zones de missions au travers d'une succession de N-1 segments intermédiaires reliant en série les N zones de mission sans reboucler sur une zone de mission depuis leur point d'accès en entrée respectif vers leur point d'accès en sortie respectif ; et

la troisième étape (108, 408) utilise un algorithme de plus court chemin passant par tous les points d'entrée et de sortie des zones de mission, déterminés dans la deuxième étape (106, 406) depuis le point d'accès en entrée de l'ensemble des zones de mission jusqu'au point d'accès en sortie de l'ensemble des zones de mission.

3. Procédé d'aide à l'élaboration du plan de vol selon la revendication 2, dans lequel
l'algorithme de plus court chemin est compris dans l'ensemble des algorithmes formés par :

l'algorithme « brute force », et
les algorithmes génétique, et
l'algorithme des « colonies de fourmis, et
l'algorithme du plus proche voisin.

4. Procédé d'aide à l'élaboration du plan de vol selon l'une quelconque des revendications 1 à 3, dans lequel

le nombre total de zones de mission (160, 162, 164, 166, 168 ; 210, 212, 214, 216, 218 ; 260, 262, 264, 266, 268) est un entier N supérieur ou égal à 2, et
chaque zone de mission (160, 162, 164, 166, 168; 210, 212, 214, 216, 218 ; 260, 262, 264, 266, 268) identifiée par un indice d'identification i, i variant de 1 à N, a une forme polygonale ayant un nombre de coté $n_i$ et un nombre de sommets $n_i$.

5. Procédé d'aide à l'élaboration du plan de vol selon l'une quelconque des revendications 1 à 4, dans lequel

l'ensemble (154; 204) des zones de mission comprend au moins une zone de mission de premier type (162, 164, 166 ; 210, 212, 214, 216, 218) ayant un point d'accès en entrée et un point d'accès en sortie différents qui sont situés tous deux à l'intérieur de ladite zone de mission de premier type, ou
pour l'un sur le contour de ladite zone de mission de premier type et pour l'autre à l'intérieur de ladite zone de mission de premier type.

6. Procédé d'aide à l'élaboration du plan de vol selon la revendication 5, dans lequel
Chaque zone de premier type (162, 164, 166 ; 182) comporte un motif interne ouvert (302, 312, 322, 332) de parcours de l'aéronef depuis le point d'accès en entrée vers le point d'accès en sortie de ladite zone de mission de premier type.

7.    Procédé d'aide à l'élaboration du plan de vol selon la revendication 6, dans lequel le motif ouvert (302, 312, 322, 332) d'au moins une zone de mission de premier type est composé de segments successifs et/ou a une forme d'une courbe oscillante autour d'une direction principale ou une forme d'une courbe spirale.

8.    Procédé d'aide à l'élaboration du plan de vol selon l'une quelconque des revendications 1 à 7, dans lequel

l'ensemble (154 ;254) des zones de mission comprend au moins une zone de mission de deuxième type (160, 168 ; 260, 192 ; 262, 264, 266, 268) ayant un même point d'accès en entrée et en sortie, le point d'accès en entrée et en sortie étant situé à l'intérieur de ladite zone de mission de deuxième type ou sur le contour de ladite zone de mission de deuxième type.

9.    Procédé d'aide à l'élaboration d'un plan de vol selon la revendication 8, dans lequel

chaque zone de mission de deuxième type (160, 168 ; 192 ; 260, 262, 264, 266, 268) a une forme polygonale convexe, et le point d'accès en entrée et en sortie de ladite zone de deuxième type (160, 168 ; 192 ; 260, 262, 264, 266, 268) est situé à l'intérieur de ladite zone de mission et est l'isobarycentre des sommets de son polygone de contour.

10.  Procédé d'aide à l'élaboration d'un plan de vol selon la revendication 9, dans lequel chaque zone de mission de deuxième type (160, 168 ; 192) comporte un motif interne fermé (352, 362) de parcours de l'aéronef partant depuis le point d'accès unique servant d'entrée et retournant vers le point d'accès unique servant de sortie de ladite zone de mission de deuxième type.

11.  Procédé d'aide à l'élaboration d'un plan de vol selon la revendication 10, dans lequel le motif interne fermé (352, 362) d'au moins une zone de mission de deuxième type (160, 168) est composé de segments successifs et/ou a une forme d'un ensemble d'un nombre entier, supérieur ou égal à 2, de lobes distribués angulairement sur un secteur d'ouverture angulaire limité ou omnidirectionnelle.

12.  Procédé d'aide à l'élaboration d'un plan de vol selon l'une quelconque des revendications 1 à 7, dans lequel

le nombre total de zones de mission est un entier N supérieur ou égal à 2, et toutes les zones de mission (210, 212, 214, 216, 218) sont des zones de mission de premier type ayant chacune un point d'accès en entrée et un point d'accès en sortie différents qui sont situés tous deux à l'intérieur de ladite zone de mission de premier type, ou pour l'un sur le contour de ladite zone de mission de premier type et pour l'autre à l'intérieur de ladite zone de mission de premier type.

13.  Procédé d'aide à l'élaboration d'un plan de vol selon l'une quelconque des revendications 1 à 4 dans lequel

le nombre total de zones de mission est un entier N supérieur ou égal à 2, et toutes les zones de mission (260, 262, 264, 266, 268) sont des zones de mission de deuxième type ayant pour chacune un point d'accès en entrée et en sortie différent, le point d'accès en entrée et en sortie d'une zone de mission de deuxième type quelconque étant situé à l'intérieur de ladite zone de mission de deuxième type ou sur le contour de ladite zone de mission de deuxième type.

14.  Procédé d'aide à l'élaboration d'un plan de vol selon l'une quelconque des revendications 1 à 4, comprenant

une quatrième étape (110) d'affichage, dans laquelle un afficheur affiche le plan de vol déterminé dans la troisième étape, et/ou une cinquième étape (112) dans laquelle le plan de vol, déterminé dans la troisième étape, est transféré à un système de gestion de vol ayant un niveau de sécurité élevé.

15.  Système d'aide d'un opérateur aéronautique à l'élaboration d'un plan de vol d'un aéronef passant par un ensemble de zones géographiques de mission prédéterminées, comprenant un calculateur électronique d'aide (4) de l'opérateur aéronautique, une interface homme système IHS (8) associé et une base de données (6);

La base de donnée (6) et/ou l'interface homme-système (8) étant configuré pour dans une première étape préalable, fournir au calculateur électronique d'aide (4) un ensemble au moins deux zones géographiques de mission séparées, caractérisées géométriquement par leurs formes convexes et leur emplacement dans un repère géographique bidimensionnel, et fournir dans le même repère les coordonnées géométriques d'un point d'accès en entrée et d'un point d'accès en sortie de l'ensemble des zones de mission, les points d'accès en entrée et en sortie de l'ensemble étant séparés de chacune des zones de mission ;

le calculateur électronique d'aide (4) et/ou la base de données (6) est ou sont configuré(s) pour, dans une deuxième étape, déterminer respectivement pour chaque zone de mission, un point d'accès d'entrée et un point d'accès en sortie de la zone de mission, les points d'accès d'entrée et sortie associés à une zone de mission pouvant être séparés ou confondus ; et

le calculateur électronique d'aide (4) est configuré pour, dans une troisième étape postérieure aux première et deuxième étape, déterminer à l'aide d'un algorithme de plus court chemin un trajet interzones depuis le point d'accès en entrée jusqu'au point d'accès en sortie de l'ensemble des zones de mission qui connecte en série et sans boucle toutes les zones de mission par leurs points d'accès en entrée et en sortie, et dont la longueur est minimale,

le système d'aide de l'opérateur aéronautique à l'élaboration d'un plan de vol étant **caractérisé en ce que**

l'ensemble (154 ; 204) des zones de mission comprend au moins une zone de mission de premier type (162, 164, 166 ; 212, 214, 216, 218) ayant un point d'accès en entrée et un point d'accès en sortie différents qui sont tous deux à l'intérieur de ladite zone de mission de premier type, ou pour l'un sur le contour de ladite zone de mission de premier type et pour l'autre à l'intérieur de ladite zone de mission de premier type ; et/ou

l'ensemble (154 ;254) des zones de mission comprend au moins une zone de mission de deuxième type (160, 168 ; 260, 192 ; 262, 264, 266, 268) ayant un même point d'accès en entrée et en sortie, le point d'accès en entrée et en sortie étant situé à l'intérieur de ladite zone de mission de deuxième type ou sur le contour de ladite zone de mission de deuxième type.

16. Système d'aide d'un opérateur aéronautique à l'élaboration d'un plan de vol d'un aéronef selon la revendication 15, dans lequel

l'interface homme-système (8) est configuré pour, dans une quatrième étape, afficher au travers d'un afficheur (12) le plan de vol déterminé dans la troisième étape, et/ou le calculateur d'aide (4) est configuré pour dans une cinquième étape transférer le plan de vol, déterminé dans la troisième étape, à un système de gestion de vol (16) ayant un niveau de sécurité élevé.

**Patentansprüche**

1. Verfahren zur Unterstützung eines Luftfahrzeugbetreibers bei der Erstellung eines Flugplans für ein Luftfahrzeug, das durch eine Reihe von vorbestimmten geographischen Missionszonen fliegt, implementiert durch ein Hilfssystem (2) des Betreibers, das einen elektronischen Hilfsrechner (4), eine assoziierte Mensch-System-Schnittstelle HSI (8) und eine Datenbank (6) umfasst;

wobei das Verfahren zur Unterstützung bei der Erstellung des Flugplans eine Reihe von Schritten umfasst, bestehend aus:

- Liefern, in einem ersten Vorabschritt (104; 404), einer Reihe (154) von mindestens zwei getrennten geographischen Missionszonen, die geometrisch durch ihre konvexen Formen und ihre Lage in einem zweidimensionalen geographischen Koordinatensystem gekennzeichnet sind, und Liefern, in demselben Koordinatensystem, der geometrischen Koordinaten eines Eintrittszugangspunkts und eines Austrittszugangspunkts der Reihe von Missionszonen, wobei die Ein- und Austrittszugangspunkte der Reihe von jeder der Missionszonen getrennt sind; dann

- Bestimmen, in einem zweiten Schritt (106; 406), für jede Missionszone, jeweils eines Ein- und eines Austrittszugangspunkts der Missionszone, wobei die mit einer Missionszone assoziierten Ein- und Austrittszugangspunkte getrennt sein oder zusammenfallen können; dann

- Bestimmen, in einem dritten Schritt (108; 408), mit Hilfe eines Kürzester-Weg-Algorithmus, eines Interzonenwegs vom Eintrittszugangspunkt zum Austrittszugangspunkt der Reihe von Missionszonen, der alle Missionszonen über ihre Ein- und Austrittszugangspunkte in Serie und schleifenfrei verbindet und dessen Länge minimal ist,

wobei das Verfahren zur Unterstützung bei der Erstellung des Flugplans **dadurch gekennzeichnet ist, dass**:

die Reihe (154; 204) der Missionszonen mindestens eine Missionszone des ersten Typs (162, 164, 166; 212, 214, 216, 218) mit einem unterschiedlichen Ein- und Austrittszugangspunkt umfasst, die sich beide innerhalb der Missionszone des ersten Typs oder für den einen auf der Kontur der Missionszone des ersten Typs und für den anderen innerhalb der Missionszone des ersten Typs befinden; und/oder
die Reihe (154; 254) von Missionszonen mindestens eine Missionszone des zweiten Typs (160, 168; 260, 192; 262, 264, 266, 268) mit einem selben Ein- und Austrittszugangspunkt umfasst, wobei sich der Ein- und Austrittszugangspunkt innerhalb der Missionszone des zweiten Typs oder auf der Kontur der Missionszone des zweiten Typs befinden.

2. Verfahren zur Unterstützung bei der Erstellung eines Flugplans nach Anspruch 1, wobei

die Gesamtzahl von Missionszonen eine ganze Zahl N gleich oder größer als 2 ist und der Interzonenweg, dessen Länge minimal ist, zum Verbinden des Eintrittszugangspunkts der Reihe von Missionszonen mit dem Austrittszugangspunkt der Reihe von Missionszonen zu einer Kette durch eine Folge von N-1 Zwischensegmenten konfiguriert ist, die die N Missionszonen in einer Reihe verbinden, ohne von ihrem jeweiligen Eintrittszugangspunkt zu ihrem jeweiligen Austrittszugangspunkt zu einer Missionszone zurückzukehren; und
der dritte Schritt (108, 408) einen Kürzester-Weg-Algorithmus durch alle Ein- und Austrittszugangspunkte der Missionszonen verwendet, die im zweiten Schritt (106, 406) vom Eintrittszugangspunkt der Reihe von Missionszonen bis zum Austrittszugangspunkt der Reihe von Missionszonen bestimmt wurden.

3. Verfahren zur Unterstützung bei der Erstellung des Flugplans nach Anspruch 2, wobei
der Kürzester-Weg-Algorithmus in der Reihe der folgenden Algorithmen enthalten ist, die gebildet wird durch:

den "Brute-Force"-Algorithmus, und
die genetischen Algorithmen, und
den "Ameisenkolonie"-Algorithmus, und
den Nächster-Nachbar-Algorithmus.

4. Verfahren zur Unterstützung bei der Erstellung des Flugplans nach einem der Ansprüche 1 bis 3, wobei

die Gesamtzahl von Missionszonen (160, 162, 164, 166, 168; 210, 212, 214, 216, 218; 260, 262, 264, 266, 268) eine ganze Zahl N gleich oder größer als 2 ist, und
jede Missionszone (160, 162, 164, 166, 168; 210, 212, 214, 216, 218; 260, 262, 264, 266, 268), die durch einen Identifikationsindex i identifiziert wird, wobei i von 1 bis N variiert, eine polygonale Form mit einer Anzahl $n_i$ von Seiten und einer Anzahl $n_i$ von Scheitelpunkten hat.

5. Verfahren zur Unterstützung bei der Erstellung des Flugplans nach einem der Ansprüche 1 bis 4, wobei

die Reihe (154; 204) von Missionszonen mindestens eine Missionszone des ersten Typs (162, 164, 166; 210, 212, 214, 216, 218) mit einem unterschiedlichen Ein- und Austrittszugangspunkt umfasst, die sich
beide innerhalb der Missionszone des ersten Typs, oder
für den einen auf der Kontur der Missionszone des ersten Typs und für den anderen innerhalb der Missionszone des ersten Typs befinden.

6. Verfahren zur Unterstützung bei der Erstellung des Flugplans nach Anspruch 5, wobei
jede Zone des ersten Typs (162, 164, 166; 182) ein offenes inneres Muster (302, 312, 322, 332) für die Bahn des Luftfahrzeugs vom Eintrittszugangspunkt zum Austrittszugangspunkt der Missionszone des ersten Typs aufweist.

7. Verfahren zur Unterstützung bei der Erstellung des Flugplans nach Anspruch 6, wobei das offene Muster (302, 312, 322, 332) von mindestens einer Missionszone des ersten Typs aus aufeinanderfolgenden Segmenten besteht und/oder die Form einer um eine Hauptrichtung schwingenden Kurve oder die Form einer Spiralkurve hat.

8. Verfahren zur Unterstützung bei der Erstellung des Flugplans nach einem der Ansprüche 1 bis 7, wobei
die Reihe (154; 254) von Missionszonen mindestens eine Missionszone des zweiten Typs (160, 168; 260, 192; 262, 264, 266, 268) mit einem selben Ein- und Austrittszugangspunkt umfasst, wobei sich der Ein- und der Austrittszugangspunkt innerhalb der Missionszone des zweiten Typs oder auf der Kontur der Missionszone des zweiten Typs befinden.

9. Verfahren zur Unterstützung bei der Erstellung eines Flugplans nach Anspruch 8, wobei

jede Missionszone des zweiten Typs (160, 168; 192; 260, 262, 264, 266, 268) eine konvexe polygonale Form hat und
der Ein- und Austrittszugangspunkt der Missionszone des zweiten Typs (160, 168; 192; 260, 262, 264, 266, 268) innerhalb der Missionszone liegt und das Isobaryzentrum der Scheitelpunkte seines Konturpolygons ist.

10. Verfahren zur Unterstützung bei der Erstellung eines Flugplans nach Anspruch 9, wobei
jede Missionszone des zweiten Typs (160, 168; 192) ein geschlossenes inneres Muster (352, 362) der Bahn des Luftfahrzeugs aufweist, das von dem einzigen Zugangspunkt ausgeht, der als Eingang dient, und zu dem einzigen Zugangspunkt zurückkehrt, der als Ausgang der Missionszone des zweiten Typs dient.

11. Verfahren zur Unterstützung bei der Erstellung eines Flugplans nach Anspruch 10, wobei das geschlossene innere Muster (352, 362) mindestens einer Missionszone (160, 168) des zweiten Typs aus aufeinanderfolgenden Segmenten besteht und/oder die Form einer Reihe einer ganzen Zahl, gleich oder größer als 2, von Lappen hat, die winkelmäßig über einen Sektor mit winkelmäßig begrenzter oder omnidirektionaler Öffnung verteilt sind.

12. Verfahren zur Unterstützung bei der Erstellung eines Flugplans nach einem der Ansprüche 1 bis 7, wobei

die Gesamtzahl von Missionszonen eine ganze Zahl N gleich oder größer als 2 ist, und
alle Missionszonen (210, 212, 214, 216, 218) Missionszonen des ersten Typs sind, die jeweils einen unterschiedlichen Ein- und Austrittszugangspunkt haben,
die sich beide innerhalb der Missionszone des ersten Typs, oder
für den einen auf der Kontur der Missionszone des ersten Typs und für den anderen innerhalb der Missionszone des ersten Typs befinden.

13. Verfahren zur Unterstützung bei der Erstellung eines Flugplans nach einem der Ansprüche 1 bis 4, wobei

die Gesamtzahl von Missionszonen eine ganze Zahl N gleich oder größer als 2 ist, und
alle Missionszonen (260, 262, 264, 266, 268) Missionszonen des zweiten Typs jeweils mit einem unterschiedlichen Ein- und Austrittszugangspunkt sind, wobei sich der Ein- und Austrittszugangspunkt einer beliebigen Missionszone des zweiten Typs innerhalb der Missionszone des zweiten Typs oder auf der Kontur der Missionszone des zweiten Typs befinden.

14. Verfahren zur Unterstützung bei der Erstellung eines Flugplans nach einem der Ansprüche 1 bis 4, das Folgendes umfasst:

einen vierten Anzeigeschritt (110), in dem ein Display den im dritten Schritt bestimmten Flugplan anzeigt, und/oder
einen fünften Schritt (112), in dem der im dritten Schritt bestimmte Flugplan an ein Flugmanagementsystem mit einem hohen Sicherheitsniveau übertragen wird.

15. System zur Unterstützung eines Luftfahrzeugbetreibers bei der Erstellung eines Flugplans für ein Luftfahrzeug, das eine Reihe von vorbestimmten geographischen Missionszonen durchfliegt, das einen elektronischen Hilfsrechner (4) des Luftfahrzeugbetreibers, eine assoziierte Mensch-System-Schnittstelle HSI (8) und eine Datenbank (6) umfasst;

wobei die Datenbank (6) und/oder die Mensch-System-Schnittstelle (8) so konfiguriert sind, dass sie dem elektronischen Hilfsrechner (4) in einem ersten Vorabschritt eine Reihe von mindestens zwei getrennten geografischen Missionszonen liefern, die geometrisch durch ihre konvexen Formen und ihre Lage in einem zweidimensionalen geografischen Koordinatensystem gekennzeichnet sind, und im selben Koordinatensystem die geometrischen Koordinaten eines Eintrittszugangspunkts und eines Austrittszugangspunkts der Reihe von Missionszonen liefern, wobei die Ein- und Austrittszugangspunkte der Reihe von jeder der Missionszonen getrennt sind;
der elektronische Hilfsrechner (4) und/oder die Datenbank (6) zum Bestimmen, in einem zweiten Schritt für jede Missionszone, jeweils eines Eintrittszugangspunkts und eines Austrittszugangspunkts der Missionszone konfiguriert ist/sind, wobei die mit einer Missionszone assoziierten Ein- und Austrittszugangspunkte getrennt sein oder zusammenfallen können; und
der elektronische Hilfsrechner (4) zum Bestimmen, in einem dritten Schritt nach dem ersten und zweiten Schritt mit Hilfe eines Kürzester-Weg-Algorithmus, eines Interzonenwegs vom Eintrittszugangspunkt zum Austrittszugangspunkt der Reihe der Missionszonen konfiguriert ist, der alle Missionszonen über ihre Ein- und Austrittszugangspunkte in Reihe und schleifenfrei verbindet und dessen Länge minimal ist,
wobei das System zur Unterstützung des Luftfahrzeugbetreibers bei der Erstellung eines Flugplans **dadurch gekennzeichnet ist, dass** die Reihe (154; 204) der Missionszonen mindestens eine Missionszone des ersten Typs (162, 164, 166; 212, 214, 216, 218) mit einem unterschiedlichen Ein- und Austrittszugangspunkt umfasst, die sich beide innerhalb der Missionszone des ersten Typs oder für den einen auf der Kontur der Missionszone des ersten Typs und für den anderen innerhalb der Missionszone des ersten Typs befinden; und/oder
die Reihe (154; 254) der Missionszonen mindestens eine Missionszone des zweiten Typs (160, 168; 260, 192; 262, 264, 266, 268) mit einem selben Ein- und Austrittszugangspunkt umfasst, wobei sich der Ein- und der Austrittszugangspunkt innerhalb der Missionszone des zweiten Typs oder auf der Kontur der Missionszone des zweiten Typs befinden.

**16.** System zur Unterstützung eines Luftfahrzeugbetreibers bei der Erstellung eines Flugplans für ein Luftfahrzeug nach Anspruch 15, wobei

die Mensch-System-Schnittstelle (8) zum Anzeigen, in einem vierten Schritt, des im dritten Schritt bestimmten Flugplans auf einem Display (12) konfiguriert ist, und/oder der Hilfsrechner (4) zum Übertragen, in einem fünften Schritt, des im dritten Schritt bestimmten Flugplans an ein Flugmanagementsystem (16) mit einem hohen Sicherheitsniveau konfiguriert ist.

**Claims**

**1.** A method for assisting an aeronautical operator in the creation of a flight plan for an aircraft passing through a set of predetermined geographic mission zones, implemented by an operator assistance system (2) comprising an electronic assistance computer (4), an associated human-system interface HSI (8) and a database (6);

the method for assisting in the creation of the flight plan comprising a set of steps consisting in:

- in a preliminary first step (104; 404), supplying a set (154) of at least two separate geographic mission zones, characterised geometrically by their convex forms and their placement in a two-dimensional geographic reference frame, and supplying, in the same reference frame, the geographic coordinates of an entry access point and of an exit access point of the set of the mission zones, the entry and exit access points of the set being separate from each of the mission zones; then
- in a second step (106; 406), determining, respectively for each mission zone, an entry access point and an exit access point of the mission zone, the entry and exit access points associated with a mission zone being able to be separate or merged; then
- in a third step (108; 408), determining, using a shorter path algorithm, an interzone path from the entry access point to the exit access point of the set of the mission zones which connects, in series and without loop, all the mission zones by their entry and exit access points, and the length of which is minimal,

the method for assisting in the creation of the flight plan being **characterised in that**:

the set (154; 204) of the mission zones comprises at least one mission zone of first type (162, 164, 166; 212, 214, 216, 218) having an entry access point and an exit access point that are different which are both within said mission zone of first type, or, for one, on the outline of said mission zone of first type and, for the other, within said mission zone of first type; and/or,

the set (154; 254) of the mission zones comprises at least one mission zone of second type (160, 168; 260, 192; 262, 264, 266, 268) having a same entry and exit access point, the entry and exit access point being situated within said mission zone of second type or on the outline of said mission zone of second type.

**2.** The method for assisting in the creation of a flight plan according to claim 1, wherein

the total number of mission zones is an integer number N greater than or equal to 2, and the interzone path, the length of which is minimal, is configured to link, in a chain, the entry access point of the set of the mission zones to the exit access point of the set of the mission zones through a succession of N-1 intermediate segments linking in series the N mission zones without looping back to a mission zone from their respective entry access point to their respective exit access point; and

the third step (108, 408) uses a shorter path algorithm passing through all the entry and exit points of the mission zones, determined in the second step (106, 406) from the entry access point of the set of the mission zones to the exit access point of the set of the mission zones.

**3.** The method for assisting in the creation of the flight plan according to claim 2, wherein
the shorter path algorithm is comprised in the set of the algorithms formed by:

the "brute force" algorithm, and
the genetic algorithms, and
the "ant colonies" algorithm, and
the nearest neighbour algorithm.

**4.** The method for assisting in the creation of the flight plan according to any one of claims 1 to 3, wherein

the total number of mission zones (160, 162, 164, 166, 168; 210, 212, 214, 216, 218; 260, 262, 264, 266, 268) is an integer number N greater than or equal to 2, and
each mission zone (160, 162, 164, 166, 168; 210, 212, 214, 216, 218; 260, 262, 264, 266, 268) identified by an identification index i, with i varying from 1 to N, has a polygonal form having a number of sides $n_i$ and a number of vertices $n_i$.

5. The method for assisting in the creation of the flight plan according to any one of claims 1 to 4, wherein

the set (154; 204) of the mission zones comprises at least one mission zone of first type (162, 164, 166; 210, 212, 214, 216, 218) having an entry access point and an exit access point that are different which are situated
both within said mission zone of first type, or for one, on the outline of said mission zone of first type and, for the other, within said mission zone of first type.

6. The method for assisting in the creation of the flight plan according to claim 5, wherein
each zone of first type (162, 164, 166; 182) has an open internal pattern (302, 312, 322, 332) of travel of the aircraft from the entry access point to the exit access point of said mission zone of first type.

7. The method for assisting in the creation of the flight plan according to claim 6, wherein the open pattern (302, 312, 322, 332) of at least one mission zone of first type is composed of successive segments and/or is shaped as a curve oscillating about a main direction or shaped as a spiral curve.

8. The method for assisting in the creation of the flight plan according to any one of claims 1 to 7, wherein the set (154; 254) of the mission zones comprises at least one mission zone of second type (160, 168; 260, 192; 262, 264, 266, 268) having a same entry and exit access point, the entry and exit access point being located within said mission zone of second type or on the outline of said mission zone of second type.

9. The method for assisting in the creation of a flight plan according to claim 8, wherein

each mission zone of second type (160, 168; 192; 260, 262, 264, 266, 268) has a convex polygonal form, and
the entry and exit access point of said zone of second type (160, 168; 192; 260, 262, 264, 266, 268) is located within said mission zone and is the isobaric center of the vertices of its outline polygon.

10. The method for assisting in the creation of a flight plan according to claim 9, wherein
each mission zone of second type (160, 168; 192) has a closed internal pattern (352, 362) of travel of the aircraft starting from the single access point serving as entry and returning to the single access point serving as exit of said mission zone of second type.

11. The method for assisting in the creation of a flight plan according to claim 10, wherein the closed internal pattern (352, 362) of at least one mission zone of second type (160, 168) is composed of successive segments and/or has a form of a set of an integer number, greater than or equal to 2, of lobes distributed angularly over a sector of limited or omnidirectional angular aperture.

12. The method for assisting in the creation of a flight plan according to any one of claims 1 to 7, wherein

the total number of mission zones is an integer number N greater than or equal to 2, and
all the mission zones (210, 212, 214, 216, 218) are mission zones of first type each having an entry access point and an exit access point that are different which are located
both within said mission zone of first type, or for one, on the outline of said mission zone of first type and, for the other, within said mission zone of first type.

13. The method for assisting in the creation of a flight plan according to any one claims 1 to 4, wherein

the total number of mission zones is an integer number N greater than or equal to 2, and
all the mission zones (260, 262, 264, 266, 268) are mission zones of second type having, for each, a different entry and exit access point, the entry and exit access point of any mission zone of second type being located within said mission zone of second type or on the outline of said mission zone of second type.

14. The method for assisting in the creation of a flight plan according to any one of claims 1 to 4, comprising

a fourth step (110) of display, in which a display displays the flight plan determined in the third step, and/or
a fifth step (112) in which the flight plan, determined in the third step, is transferred to a flight management system having a high security level.

15. A system for assisting an aeronautical operator in the creation of a flight plan for an aircraft passing through a set of predetermined geographic mission zones, comprising an electronic assistance computer (4) for the aeronautical operator, an associated human-system interface HSI (8) and a database (6);

the database (6) and/or the human-system interface (8) being configured to, in a preliminary first step, supply the electronic assistance computer (4) with a set of at least two separate geographic mission zones, characterised geometrically by their convex shapes and their placement in a two-dimensional geographic reference frame, and supply, in the same reference frame, the geometrical coordinates of an entry access point and of an exit access point of the set of the mission zones, the entry and exit access points of the set being separate from each of the mission zones;

the electronic assistance computer (4) and/or the database (6) is or are configured to, in a second step, determine, respectively for each mission zone, an entry access point and an exit access point of the mission zone, the entry and exit access points associated with a mission zone being able to be separate or merged; and

the electronic assistance computer (4) is configured to, in a third step following the first and second steps, determine, using a shorter path algorithm, an interzone path from the entry access point to the exit access point of the set of the mission zones which connects, in series and without loop, all the mission zones by their entry and exit access points, and the length of which is minimal,

the system for assisting the aeronautical operator in the creation of a flight plan being **characterised in that**

the set (154; 204) of the mission zones comprises at least one mission zone of first type (162, 164, 166; 212, 214, 216, 218) having an entry access point and an exit access point that are different which are both within said mission zone of first type, or, for one, on the outline of said mission zone of first type and, for the other, within said mission zone of first type; and/or,

the set (154; 254) of the mission zones comprises at least one mission zone of second type (160, 168; 260, 192; 262, 264, 266, 268) having a same entry and exit access point, the entry and exit access point being located within said mission zone of second type or on the outline of said mission zone of second type.

16. The system for assisting an aeronautical operator in the creation of a flight plan for an aircraft according to claim 15, wherein

the human-system interface (8) is configured to, in a fourth step, display through a display (12) the flight plan determined in the third step, and/or the assistance computer (4) is configured to, in a fifth step, transfer the flight plan, determined in the third step, to a flight management system (16) having a high security level.

FIG.1

FIG.2

152

164

154

166

172

162

168

160

176

$P_{so}$

Point de sortie de
l'ensemble des
zones de mission

$P_{eo}$

Point d'entrée de
l'ensemble des
zones de mission

FIG.3

182

Point d'entrée en
zone mission

$P_{ei}$

Sens de parcours

Point de sortie de la
zone mission

$P_{si}$

184

186

## FIG.4A

192

Isobarycentre
du polygone

$P_{esi}$

194

## FIG.4B

202

228
230
232
204

226
214
216
234

212
236

224
218

222
238

210
Pₛₒ

220

Pₑₒ

**FIG.5**

252

274
254

272
264

262
276
266

278
268

270

260
Pₛₒ

Pₑₒ

**FIG.6**

P$_{ei}$

302

# FIG.7A

P$_{si}$

P$_{ei}$

312

# FIG.7B

P$_{si}$

P$_{ei}$

322

# FIG.7C

P$_{si}$

P$_{si}$

P$_{ei}$

332

# FIG.7D

352

P~esi~

FIG.8A

362

P~esi~

FIG.8B

402

```
┌─────────────────┐
│      404        │
└─────────────────┘
         │
         ▼
┌─────────────────┐
│      406        │
└─────────────────┘
         │
         ▼
┌─────────────────┐
│      408        │
└─────────────────┘
         │
         ▼
┌─────────────────┐
│      410        │
└─────────────────┘
         │
         ▼
┌─────────────────┐
│      412        │
└─────────────────┘
```

FIG.9

FIG.10A

Trajet 1

FIG.10B

Trajet 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8275499 B2
- WO 2009093276 A1
- CN 107748499 A
- US 2017178517 A1
- US 8744760 B1
- US 2015066248 A1